# EUROPÄISCHE PATENTSCHRIFT

(11) **EP 4 100 288 B1**
(45) Veröffentlichungstag und Bekanntmachung des Hinweises auf die Patenterteilung: **05.03.2025**
(21) Anmeldenummer: 21701276.4
(22) Anmeldetag: 19.01.2021
(51) Int. Cl.: B60T 17/00, B60T 17/02, B60T 17/06, F04B 41/02, F04B 39/00, F04B 39/12, F04B 39/14, F04B 35/00, F15B 21/048

(54) **DRUCKLUFTMODUL-BAUKASTENSYSTEM FÜR EIN NUTZFAHRZEUG**
MODULAR COMPRESSED AIR SYSTEM FOR A COMMERCIAL VEHICLE
SYSTÈME MODULAIRE D'AIR COMPRIMÉ POUR UN VÉHICULE COMMERCIAL

(30) Priorität: 04.02.2020 DE 102020000730
(43) Veröffentlichungstag der Anmeldung: 14.12.2022
(73) Patentinhaber: MAN Truck & Bus SE, 80995 München (DE)
(72) Erfinder: GESIERICH, Luis, 80995 München (DE)
(74) Vertreter: v. Bezold & Partner Patentanwälte - PartG mbB
(86) Internationale Anmeldenummer: PCT/EP2021/051025
(87) Internationale Veröffentlichungsnummer: WO 2021/156047

(56) Entgegenhaltungen:
- EP-A1- 3 616 771
- CN-U- 202 163 304
- CN-U- 202 879 480
- CN-U- 203 306 006

## Beschreibung

Die Erfindung betrifft ein Druckluftmodul-Baukastensystem für ein Nutzfahrzeug mit mehreren Druckluftkomponenten und einer Tragvorrichtung.

Die US 2007/0234904 A1 offenbart ein Trockendruckluftmodul zur Befestigung am Rahmen eines Nutzfahrzeuges. Das Trockendruckluftmodul besteht aus einem Gehäuse, einem Luftkompressor, einem Lufttrockner und einem Reservoir. Der Luftkompressor, der Lufttrockner und das Reservoir sind in einem Gehäuse angeordnet und können gemeinsam mit dem Gehäuse am Rahmen befestigt werden. Der Lufttrockner wird mit Druckluft aus dem Luftkompressor und das Reservoir mit trockener Druckluft aus dem Lufttrockner versorgt. Der Behälter ist in der Lage, die trockene Druckluft zu speichern und dem Nutzfahrzeug zuzuführen.

Die DE 195 38 339 A1 offenbart eine Vorrichtung zum Erzeugen und Bereithalten von Druckluft zur Versorgung von Druckluft-Verbrauchern in Kraftfahrzeugen. Die Vorrichtung weist eine Antriebseinrichtung, eine Kompressionsvorrichtung und einen Druckspeicher auf. Die Antriebseinrichtung, die Kompressionsvorrichtung und der Druckspeicher sind zu einer ein gemeinsames, kompaktes Gehäuse aufweisenden Einheit zusammengefasst und druckleitungsfrei miteinander verbunden.

Die EP 0 926 034 A2 offenbart eine Vorrichtung zur Montage von Druckluftbehältern an einem Fahrzeugrahmen, mit einer am Fahrzeugrahmen befestigbaren Halteeinrichtung, die an ihrem Umfang mit Aussparungen zur Aufnahme der Druckluftbehälter in einer parallelen Anordnung ausgestattet ist, und mit Spannbändern, welche um die Druckluftbehälter herumgeführt sind und diese in den Aufnahmen halten.

Die CN 202829480 U offenbart einen Behälterumschließungsauswerfer, der eine Auswerferplatte umfasst.

Die CN 203306006 U offenbart eine kombinierte Halterungsbaugruppe für einen Luftzylinder. Die kombinierte Halterungsbaugruppe umfasst L-förmige Hauptrahmen, einen U-förmigen Stützrahmen, Verstärkungsplatten, Stützplatten und Träger, wobei die beiden Hauptrahmen nebeneinander angeordnet sind.

Die CN 202163304 U offenbart eine Befestigungsvorrichtung für Kraftfahrzeug-Gasbehälter, die zu einem Schwerlast-Autoteil gehört. Die Befestigungsvorrichtung umfasst eine vordere Bordwand, eine hintere Bordwand, eine Gasbehälterträgerplattenanordnung, eine Gasbehälterklappe, eine Stabilisierungsplatte und einen Befestigungsgurt, wobei die vordere Bordwand und die hintere Bordwand mit einem Fahrzeugrahmen durch Bolzenkomponenten verbunden sind.

Der Erfindung liegt die Aufgabe zu Grunde, eine alternative und/oder verbesserte Technik zum Aufbauen eines Druckluftmoduls zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Druckluftmodul-Baukastensystem für ein Nutzfahrzeug, vorzugsweise einen Lastkraftwagen. Das Baukastensystem weist mehrere Druckluftkomponenten und eine Tragvorrichtung auf, die an einem Fahrzeugrahmen des Nutzfahrzeugs anbringbar ist. Die Tragvorrichtung und zumindest ein (z. B. erster) Teil der mehreren Druckluftkomponenten sind zu einem ersten Druckluftmodul kombinierbar, wobei das erste Druckluftmodul einen Luftkompressor, mindestens einen Druckluftbehälter und eine Druckluftaufbereitung der mehreren Druckluftkomponenten aufweist. Die Tragvorrichtung und zumindest ein (z. B. zweiter) Teil der mehreren Druckluftkomponenten sind zu einem zweiten Druckluftmodul kombinierbar, wobei das zweite Druckluftmodul den mindestens einen Druckluftbehälter und die Druckluftaufbereitung und anstelle des Luftkompressors mindestens einen weiteren Druckluftbehälter der mehreren Druckluftkomponenten aufweist.

Das Baukastensystem kann den Vorteil bieten, dass zwei Druckluftmodule für unterschiedliche Anwendungen mit sehr vielen Gleichteilen (z. B. Tragvorrichtung, mindestens ein Druckluftbehälter, Druckluftaufbereitung) gebildet werden können. Bspw. kann das erste Druckluftmodul mit dem Luftkompressor für elektromotorisch betriebene Nutzfahrzeuge und das zweite Druckluftmodul mit dem weiteren Druckluftbehälter anstelle des Luftkompressors für verbrennungsmotorisch betriebene Nutzfahrzeuge verwendet werden. Es ist nämlich möglich, dass das verbrennungsmotorisch betriebene Nutzfahrzeug bereits einen am Motorblock der Brennkraftmaschine integrierten Luftkompressor aufweist, sodass das zweite Druckluftmodul einen solchen nicht benötigt. Vorzugsweise ist somit beim Baukastensystem eine Austauschbarkeit des Luftkompressors mit einem Druckluftspeicher vorgesehen. Das Druckluftmodul kann sich somit der Antriebsart des Fahrzeuges anpassen. Dabei können die Außenmaße und alle anderen (Druckluft-)Komponenten identisch bleiben. Dies kann den Vorteil aufweisen, dass das Druckluftmodul immer als eine Einheit über alle Fahrzeugvarianten verwendet werden kann. Dies hat einen entscheidenden Einfluss auf die Entwicklung der Fahrzeuge, da immer von einem Druckluftmodul ausgegangen werden kann und nicht für die einzelnen Antriebsarten neue Varianten geschaffen werden müssen. Die Produktion profitiert von dieser Erfindung ebenfalls, da die Einbaumaße und die Schnittstellen immer identisch sind. Eine komplette Fahrzeugflotte aus elektromotorisch und verbrennungsmotorisch betriebenen Nutzfahrzeugen kann somit mit lediglich zwei unterschiedlichen Druckluftmodulen ausgestattet werden, die zudem viele Gleichteile aufweisen, da sie aus dem gleichen Baukastensystem abgeleitet sind. Dies ermöglicht Einsparungen in vielerlei Hinsicht, z. B. Entwicklungskosten, Herstellungskosten, Montagekosten usw.

Bevorzugt sind der mindestens eine Druckluftbehälter und die Druckluftaufbereitung beim ersten Druckluftmodul und beim zweiten Druckluftmodul gleich angeordnet.

Vorzugsweise ist der Luftkompressor beim ersten Druckluftmodul gleich angeordnet wie der mindestens eine weitere Druckluftbehälter beim zweiten Druckluftmodul.

In einem Ausführungsbeispiel ist die Tragvorrichtung dazu ausgebildet, die mehreren Druckluftkomponenten in mehreren, vorzugsweise zwei, vertikal beabstandeten Ebenen zu tragen. Dies kann eine günstige Bauraumausnutzung ermöglichen. Zudem kann bspw. vorgesehen sein, dass eine der Ebenen, z. B. eine obere Ebene, für den Luftkompressor und den mindestens einen weiteren Druckluftbehälter, d.h. die austauschbaren Druckluftkomponenten, genutzt wird. Vorzugsweise kann eine weitere Ebene, z. B, eine untere Ebene, für die über das erste und zweite Druckluftmodul gleichen Druckluftkomponenten (Druckluftaufbereitung, mindesten ein Druckluftbehälter) genutzt werden. Dies kann bspw. eine eindeutige Zuordenbarkeit der Druckluftmodule vereinfachen.

In einem weiteren Ausführungsbeispiel ist die Tragvorrichtung dazu ausgebildet, die mehreren Druckluftkomponenten zumindest teilweise von unten abzustützen und zumindest teilweise unterhalb der Tragvorrichtung hängend zu tragen. Eine derartige Anordnung verbraucht nur wenig Bauraum für die Tragvorrichtung und ermöglicht zudem viele Druckluftkomponenten in den Druckluftmodulen zu vereinigen.

In einem weiteren Ausführungsbeispiel ist der Luftkompressor, vorzugsweise mittels elastischer Dämpferelemente, auf der Tragvorrichtung abgestützt ist. Damit kann bspw. eine schwingungstechnische Entkopplung ermöglicht werden.

In einem weiteren Ausführungsbeispiel ist der mindestens eine weitere Druckluftbehälter, vorzugsweise starr, auf der Tragvorrichtung abgestützt.

In einer Ausführungsform ist der mindestens eine Druckluftbehälter und/oder die Druckluftaufbereitung unterhalb der Tragvorrichtung hängend getragen.

In einer weiteren Ausführungsform weist der mindestens eine Druckluftbehälter einen ersten Druckluftbehälter und einen zweiten Druckluftbehälter auf.

In einer Weiterbildung weist der erste Druckluftbehälter und/oder der zweite Druckluftbehälter beim ersten Druckluftmodul eine andere Funktion auf als beim zweiten Druckluftmodul. Damit kann auf die jeweiligen nutzfahrzeugspezifischen Anforderungen (z. B. pneumatisch betätigtes Getriebe - ja/nein) reagiert und bspw. auch berücksichtigt werden, dass das zweite Druckluftmodul den weiteren Druckluftbehälter aufweist.

In einer weiteren Ausführungsform ist der erste Druckluftbehälter, vorzugsweise mittig, zwischen dem zweiten Druckluftbehälter und der Druckluftaufbereitung angeordnet, vorzugweise hängend an der Tragvorrichtung. Dies kann ermöglichen, dass die Druckluftaufbereitung gut zugänglich außen an der Tragvorrichtung angeordnet ist, was einen einfachen Wechsel von Verschleißteilen und eine leichten Anschluss von Fluidleitungen an der Druckluftaufbereitung ermöglicht.

In einer weiteren Ausführungsform steht der erste Druckluftbehälter bezüglich einer Querachse der Tragvorrichtung (z. B. parallel zu einer Querachse des Fahrzeugrahmens bzw. des Nutzfahrzeugs) über die Tragvorrichtung hinaus über (z. B. zum Fahrzeug hin oder unter den Fahrzeugrahmen). Damit kann ungenutzter Bauraum unter dem Fahrzeugrahmen genutzt und zusätzlicher Bauraum für die Druckluftaufbereitung und den zweiten Druckluftbehälter geschaffen werden.

In einer Ausführungsvariante ist beim ersten Druckluftmodul der erste Druckluftbehälter einem ersten Bremskreis des Nutzfahrzeugs und/oder der zweite Druckluftbehälter einem zweiten Bremskreis des Nutzfahrzeugs zugeordnet oder zuordenbar.

In einer weiteren Ausführungsvariante ist beim zweiten Druckluftmodul der erste Druckluftbehälter dem ersten Bremskreis des Nutzfahrzeugs, der zweite Druckluftbehälter einem pneumatischen Nebenverbraucher (z. B. Getriebesteuerung oder Luftfederung usw.) des Nutzfahrzeugs und/oder der mindestens eine weitere Druckluftbehälter dem zweiten Bremskreis zugeordnet oder zuordenbar.

In einer weiteren Ausführungsvariante weist die Tragvorrichtung einen ersten, z. B. L-förmigen, Träger und einen zweiten, z. B. L-förmigen, Träger auf, die vorzugsweise durch mindestens ein Querelement (z. B. Querstrebe, Platte) miteinander verbunden sind. Vorzugsweise sind der erste Träger und der zweite Träger als Gleichteile ausgeführt, und/oder mehrere Querelemente umfasst, die als Gleichteile ausgeführt sind. Dies kann die Teilevarianz und die Herstellungskosten verringern und zudem Fehlmontagen verhindern. Die L-förmigen Träger können viel Bauraum zum Anordnen von Druckluftkomponenten bieten, z. B. oberhalb und unterhalb der L-förmigen Träger.

In einem Ausführungsbeispiel weist die Tragvorrichtung, vorzugsweise ein horizontaler Schenkel eines L-förmigen Trägers der Tragvorrichtung, mindestens ein, vorzugsweise rechteckiges, Durchgangsloch auf, durch das ein Spannband gespannt ist, das einen Druckbehälter des mindestens einen Druckbehälters trägt. Somit kann eine Aufnahme für das Spannband direkt in der Tragvorrichtung integriert sein. Es ist nicht notwendig, eine separate Halterung zur Befestigung des Spannbands an der Tragvorrichtung zu befestigen.

In einer Weiterbildung ist das mindestens eine Durchgangsloch im Bereich eines Kontakts mit dem Spannband abgerundet oder angefast. Alternativ oder zusätzlich kann bspw. eine Unterkante der Tragvorrichtung im Bereich eines Kontakts mit dem Druckbehälter abgerundet oder angefast sein. Damit kann ein Risiko für eine Beschädigung des Spannbands und des Druckbehälters verringert werden.

In einem weiteren Ausführungsbeispiel weist die Tragvorrichtung mindestens einen Kragenabschnitt zum flächigen Anlegen an den Fahrzeugrahmen auf, wobei vorzugsweise der mindestens eine Kragenabschnitt durch, vorzugsweise angeschweißte, Stützrippen verstärkt ist.

In einem weiteren Ausführungsbeispiel weist der Luftkompressor einen wechselbaren Filter auf, und die Tragvorrichtung weist eine Verstärkungsstrebe (z. B. Diagonalstrebe und/oder Zugstab) mit einer Aussparung (z. B. Vertiefung, Ausnehmung, Kerbe, Loch) auf. Die Aussparung schafft einen zum Wechsel des wechselbaren Filters erforderlichen Montageraum, wobei der wechselbare Filter beim Demontieren oder Montieren zwangsweise durch die Aussparung zu führen ist.

In einem weiteren Ausführungsbeispiel weist die Druckluftaufbereitung einen Lufttrockner, einen Druckregler und/oder ein Mehrkreisschutzventil, vorzugsweise Vierkreisschutzventil, auf, bevorzugt als eine integrierte Einrichtung.

Es wird darauf hingewiesen, dass das hierin offenbarte erste Druckluftmodul und das hierin offenbarte zweite Druckluftmodul auch jeweils einzeln und unabhängig von dem Druckluftmodul-Baukastensystem offenbart sind.

Ein weiterer Aspekt der vorliegenden Offenbarung betrifft ein elektromotorisch angetriebenes Nutzfahrzeug, vorzugsweise Lastkraftwagen, aufweisend das erste Druckluftmodul, das aus dem Druckluftmodul-Baukastensystem wie hierin offenbart kombiniert sein kann.

Bevorzugt ist das erste Druckluftmodul an einem Fahrzeugrahmen, z. B. Leiterrahmen, des Nutzfahrzeugs montiert, z. B. außen und/oder zwischen einer Vorderachse und einer Hinterachse des Nutzfahrzeugs.

Ein weiterer Aspekt der vorliegenden Offenbarung betrifft ein verbrennungsmotorisch angetriebenes Nutzfahrzeug, vorzugsweise Lastkraftwagen, aufweisend das zweite Druckluftmodul, das aus dem Druckluftmodul-Baukastensystem wie hierin offenbart kombiniert sein kann.

Bevorzugt ist das zweite Druckluftmodul an einem Fahrzeugrahmen, z. B. Leiterrahmen, des Nutzfahrzeugs montiert, z. B. außen und/oder zwischen einer Vorderachse und einer Hinterachse des Nutzfahrzeugs.

Besonders bevorzugt weist das verbrennungsmotorisch angetriebene Nutzfahrzeug eine Brennkraftmaschine auf, in der ein Luftkompressor umfasst, vorzugsweise integriert, ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Draufsicht auf einen Fahrzeugrahmen eines Nutzfahrzeugs;
- Figur 2: eine perspektivische Ansicht einer beispielhaften Tragvorrichtung eines Druckluftmoduls;
- Figur 3: eine perspektivische Ansicht eines beispielhaften Druckluftmoduls;
- Figur 4: eine Seitenansicht des beispielhaften Druckluftmoduls;
- Figur 5: eine weitere Seitenansicht des beispielhaften Druckluftmoduls;
- Figur 6: eine perspektivische Ansicht eines weiteren beispielhaften Druckluftmoduls;
- Figur 7: eine Seitenansicht des weiteren beispielhaften Druckluftmoduls;
- Figur 8: eine weitere Seitenansicht des weiteren beispielhaften Druckluftmoduls; und
- Figur 9: eine perspektivische Ansicht eines Halters der beispielhaften Tragvorrichtung zum Halten einer Druckluftaufbereitung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

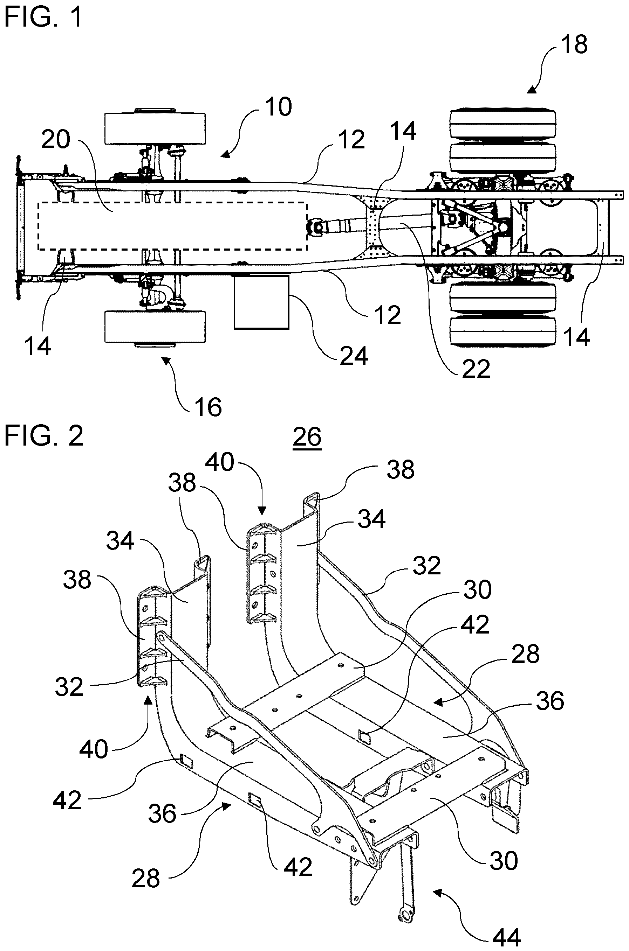

Figur 1 zeigt einen (Fahrzeug-) Rahmen 10 eines Nutzfahrzeugs. Das Nutzfahrzeug ist bevorzugt als ein Lastkraftwagen ausgeführt. Der Rahmen 10 ist als ein Leiterrahmen ausgeführt. Der Rahmen 10 weist zwei Längsträger 12 auf. Die zwei Längsträger 12 verlaufen im Wesentlichen parallel zueinander. Die zwei Längsträger 12 sind miteinander mittels mehrerer Querträger 14 verbunden. Es ist auch möglich, dass der Rahmen 10 nicht als ein Leiterrahmen ausgeführt ist, sondern beispielsweise als Gitterrahmen. Der Rahmen 10 kann auf mehreren Achsen des Nutzfahrzeugs abgestützt sein, zum Beispiel auf einer Vorderachse 16 und einer Hinterachse 18, wie in Figur 1 dargestellt ist.

Je nach Ausführung kann das Nutzfahrzeug beispielsweise ein elektromotorisch angetriebenes Nutzfahrzeug oder ein verbrennungsmotorisch angetriebenes Nutzfahrzeug sein. Die Antriebseinrichtung 20 (gegebenenfalls mit Getriebe, Leistungselektronik usw.) kann beispielsweise in einem vorderen Bereich des Rahmens 10 angeordnet sein. Die Antriebseinrichtung 20 ist beispielsweise trieblich mit einer Gelenkwelle 22 zum Antreiben der Hinterachse 18 verbunden sein. Es versteht sich, dass auch Antriebskonzepte ohne zentrale Antriebseinrichtung von der vorliegenden Offenbarung umfasst sind, zum Beispiel Radnabenmotoren, radnahe Motoren usw.

Der Rahmen 10 trägt ein Druckluftmodul 24. Vorzugsweise ist das Druckluftmodul 24 an einer Außenseite des Rahmens 10, besonders bevorzugt außen an einem der Längsträger 12 des Rahmens 10, angebracht. Besonders montage- und bauraumgünstig ist das Druckluftmodul 24 beispielsweise zwischen der Vorderachse 16 und der Hinterachse 18 angeordnet. Das Druckluftmodul 24 vereint eine Vielzahl von druckluftbezogenen Funktionen in sich, wie hierin beispielhaft noch näher beschrieben ist.

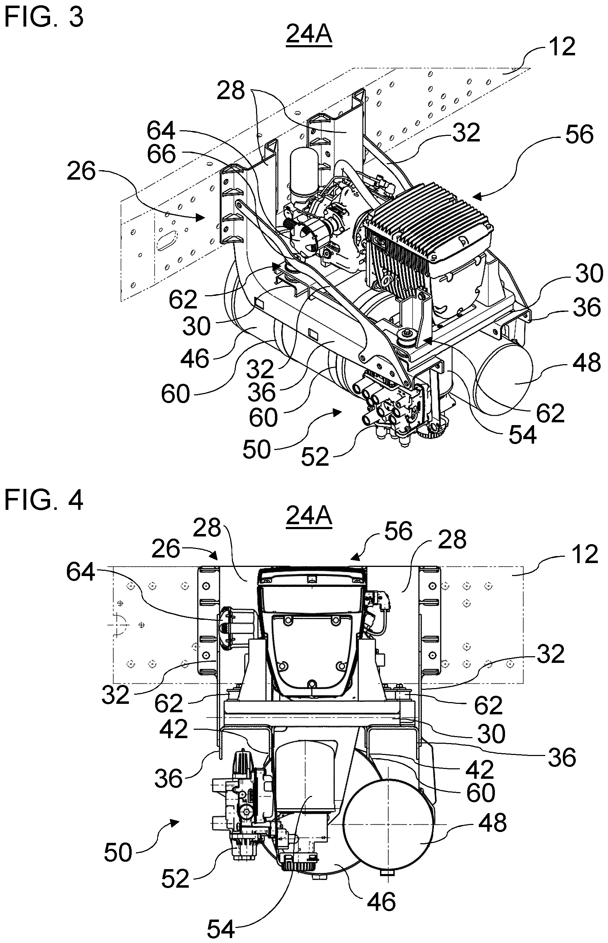

Eine Besonderheit der vorliegenden Offenbarung besteht darin, dass das Druckluftmodul 24 aus einem modularen Baukastensystem kombiniert bzw. zusammengestellt werden kann. Mittels des modularen Baukastensystems können bevorzugt zumindest zwei unterschiedliche Varianten des Druckluftmoduls 24 bereitgestellt werden. Die erste Variante des Druckluftmoduls 24 (auch erstes Druckluftmodul 24A hierin genannt) ist zum Einsatz bei einem elektromotorisch angetriebenen Nutzfahrzeug vorgesehen. Die zweite Variante des Druckluftmoduls 24 (auch zweites Druckluftmodul 24B hierin genannt) ist zum Einsatz bei einem verbrennungsmotorisch angetriebenen Nutzfahrzeug vorgesehen. Details hierzu werden hierin beispielsweise später unter Bezugnahme auf die Figuren 3 bis 8 erläutert.

Figur 2 zeigt eine beispielhafte Tragvorrichtung 26 des Druckluftmoduls 24 von Figur 1. Die Tragvorrichtung 26 kann die Besonderheit bieten, dass diese für mehrere aus dem modularen Baukastensystem kombinierbare Druckluftmodule 24 als Gleichteil verwendbar ist.

Die Tragvorrichtung 26 ist dazu ausgebildet, an dem Rahmen 10 des Nutzfahrzeugs befestigt zu werden. Die Tragvorrichtung 26 kann beispielsweise zwei Träger 28, zwei Querstreben 30 und optional zwei Verstärkungsstreben 32 aufweisen. Es ist möglich, dass die Tragvorrichtung eine andere Anzahl von Trägern 28, Querstreben 30 und/oder Verstärkungsstreben 32 aufweist. Bei mehreren Trägern 28, bei mehreren Querstreben 30 und/oder bei mehreren Verstärkungsstreben 32 können diese jeweils als Gleichteile ausgeführt sein.

Die Träger 28 sind bevorzugt als L-förmige Träger ausgeführt. Jeder Träger 28 kann einen vertikalen Schenkel 34 und einen horizontalen Schenkel 36 aufweisen. Die Träger 28 können beispielsweise als Blechziehteile (z. B. Tiefziehteil) oder als Schweißkonstruktionen ausgeführt sein.

Der vertikale Schenkel 34 des Trägers 28 wird an dem Rahmen 10 befestigt, zum Beispiel mittels lösbarer Schraubverbindungen. Der vertikale Schenkel 34 kann bspw. einen U-förmigen Querschnitt aufweisen. Der vertikale Schenkel 34 kann einen Kragenabschnitt 38 aufweisen. Der Kragenabschnitt 38 kann mit vorzugsweise eingeschweißten Stützrippen 40 verstärkt sein. Der Kragenabschnitt 38 kann Durchgangslöcher aufweisen, die zum Befestigen des Trägers 28 am Rahmen 10 dienen.

Der horizontale Schenkel 36 des Trägers 28 ist dazu ausgebildet, mehrere Druckluftkomponenten zu tragen. Der Träger 28 kann Druckluftkomponenten in mehreren Ebenen tragen. Beispielsweise können Druckluftkomponenten oberhalb von den horizontalen Schenkeln 36 abgestützt sein. Es können auch Druckluftkomponenten hängend an den horizontalen Schenkeln 36 getragen sein. Die horizontalen Schenkel 36 der Träger 28 können durch die Querstreben 30 miteinander verbunden sein. Beispielsweise können die Querstreben 30 auf die Träger 28 aufgeschweißt sein. Die Querstreben 30 können ebenfalls Druckluftkomponenten tragen.

Der horizontale Schenkel 36 kann einen U-förmigen Querschnitt aufweisen. Der horizontale Schenkel 36 weist bevorzugt mindestens ein, vorzugsweise rechteckiges, Durchgangsloch 42 auf. Durch das Durchgangsloch 42 kann ein Spannband (in Figur 2 nicht dargestellt) geführt sein, mit dem eine Druckluftkomponente (z. B. Druckluftbehälter), vorzugsweise hängend unterhalb des Trägers 28, getragen werden kann. Bevorzugt können mehrere Durchgangslöcher 42 für mehrere Spannbänder umfasst sein. Bevorzugt können auch miteinander fluchtende Durchgangslöcher 42 in beiden horizontalen Schenkeln 36 zur Durchführung desselben Spannbands umfasst sein. Damit können mehrere Anbindungspunkte für dasselbe Spannband geschaffen werden.

Die Verstärkungsstreben 32 können den horizontalen Schenkel 36 und den vertikalen Schenkel 34 miteinander verbinden. Die Verstärkungsstreben 32 dienen als Zugstäbe und können bspw. eine gleichmäßige Krafteinleitung in die Schenkel 34 und den Rahmen 10 bewirken. Die Verstärkungsstreben können sich diagonal zwischen den Schenkeln 34 und 36 erstrecken.

Optional kann noch mindestens eine Halterung 44 zum Halten einer oder mehrerer Druckluftkomponenten an dem Träger 28 angebracht sein. Die Halterung 44 ist hängend am Träger 28 befestigt. Die Halterung 44 ist unterhalb des Trägers 28 angeordnet.

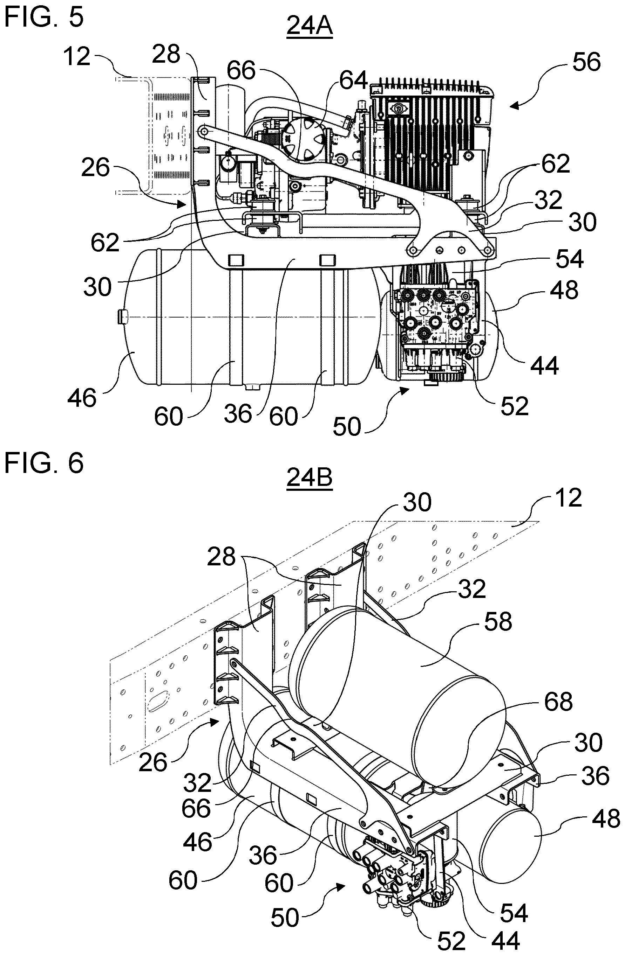

Die Figuren 3 bis 5 zeigen das erste Druckluftmodul 24A. Die Figuren 6 bis 8 zeigen das zweite Druckluftmodul 24B. Beide Druckluftmodule 24A, 24B können aus dem Baukastensystem kombiniert werden, wobei die Tragvorrichtung 26 als Gleichteil verwendet wird.

Beide Druckluftmodule 24A, 24B weisen mehrere Druckluftkomponenten auf, die teilweise als Gleichteile verwendet werden. Es ist möglich, dass mindestens eine als Gleichteil verwendete Druckluftkomponente beim ersten Druckluftmodul 24A und beim zweiten Druckluftmodul 24B eine andere Funktion aufweist.

Beide Druckluftmodule 24A, 24B weisen einen (ersten) Druckluftbehälter 46, einen (zweiten) Druckluftbehälter 48 und eine Druckluftaufbereitung 50 mit bspw. einer Druckluftventileinrichtung 52 und einem Lufttrockner 54 auf. Das erste Druckluftmodul 24A weist zusätzlich einen Luftkompressor 56 auf. Anstelle des Luftkompressors 56 weist das zweite Druckluftmodul 24B einen (dritten) Druckluftbehälter 58 auf.

Das erste Druckluftmodul 24A ist zur Verwendung mit einem elektromotorisch angetriebenen Nutzfahrzeug bestimmt. Das zweite Druckluftmodul 24B ist zur Verwendung mit einem verbrennungsmotorisch angetriebenen Nutzfahrzeug bestimmt. Das verbrennungsmotorisch angetriebene Nutzfahrzeug kann nämlich bereits in dessen Antriebseinrichtung 20 einen Luftkompressor integriert haben. Bspw. kann ein Kompressor-Gehäuse zusammen mit einem Motorblock des Verbrennungsmotors (=Antriebseinrichtung 20) gegossen sein. Es ist daher nicht erforderlich, dass das zweite Druckluftmodul 24B einen Luftkompressor aufweist. Im Gegensatz dazu kann beim elektromotorisch angetriebenen Nutzfahrzeug kein Luftkompressor in der Antriebseinrichtung 20 integriert sein. Daher ist es bevorzugt, dass das erste Druckluftmodul 24A den Luftkompressor 56 aufweist. Beim zweiten Druckluftmodul 24B kann anstelle eines Luftkompressors der Druckluftbehälter 58 angeordnet sein. Die Anordnung des Druckluftbehälters macht auch aus Bauraumgründen Sinn, da relativ viel Bauraum in dem Bereich vorhanden ist, in dem der Luftkompressor 56 beim ersten Druckluftmodul 24A angeordnet ist. Durch die Anordnung des Druckluftbehälters können weitere druckluftbezogenen Funktionen im zweiten Druckluftmodul 24B integriert werden.

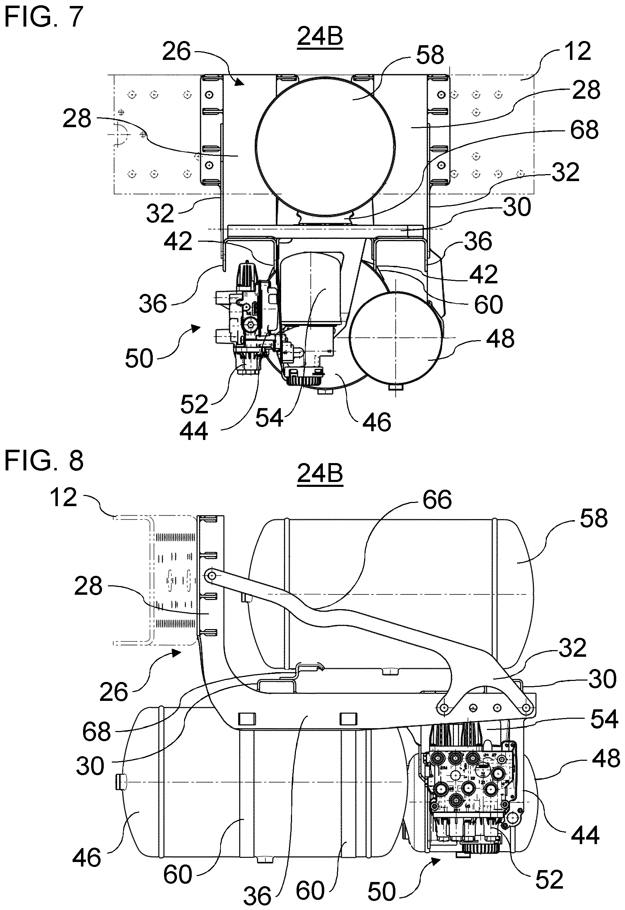

Der Druckluftbehälter 46 ist beim ersten Druckluftmodul 24A und beim zweiten Druckluftmodul 24B baugleich und gleich angeordnet. Der Druckluftbehälter 46 kann bei beiden Druckluftmodulen 24A, 24B einem Bremskreis des Nutzfahrzeugs zugeordnet sein, zum Beispiel einem Vorderachs-Bremskreis. Der Druckluftbehälter 46 ist hängend unterhalb der Tragvorrichtung 26 angeordnet, vorzugsweise mittig. Mehrere Spannbänder 60 können den Druckluftbehälter 46 an den gegenüberliegenden Durchgangslöchern 42 (siehe Figuren 4 und 7) der horizontalen Schenkel 36 mittig zwischen den Trägern 28 tragen. Der Druckluftbehälter 46 kann beispielsweise ein 40-Liter Druckluftbehälter sein.

Um eine Beschädigung der Spannbänder 60 zu verhindern, können die, vorzugsweise rechteckigen, Durchgangslöcher 42 angefast oder abgerundet sein, vorzugsweise in Abschnitten, die direkt an den Spannbändern 60 anliegen. Um eine Beschädigung des Druckluftbehälter 46 zu verhindern, kann eine den Druckluftbehälter 46 berührende Unterkante des Schenkel 36 angefast oder abgerundet sein.

Der Druckluftbehälter 46 kann mit einem Endabschnitt direkt unterhalb des Längsträgers 12 angeordnet sein, um bspw. mehr Bauraum für den Druckluftbehälter 48 und die integrierte Druckluftaufbereitung 50 zu schaffen (siehe Figuren 5 und 8). In anderen Worte, der Druckluftbehälter 46 steht bezüglich einer Querachse der Tragvorrichtung 26 über die Tragvorrichtung 26 hinaus. Der Druckluftbehälter 48 und die Druckluftaufbereitung 50 können auf entgegengesetzten Seiten des Druckluftbehälters 46 angeordnet sein.

Der Druckluftbehälter 48 ist beim ersten Druckluftmodul 24A und beim zweiten Druckluftmodul 24B baugleich und gleich angeordnet. Der Druckluftbehälter 48 kann jedoch beim ersten Druckluftmodul 24A eine andere Funktion erfüllen als beim zweiten Druckluftmodul 24B. Beispielsweise kann der Druckluftbehälter 48 beim ersten Druckluftmodul 24A einem zweiten Bremskreis des Nutzfahrzeugs zugeordnet sein, zum Beispiel einem Hinterachs-Bremskreis. Beim zweiten Druckluftmodul 24B kann der Druckluftbehälter 48 hingegen beispielsweise einer pneumatischen Getriebesteuerung für ein Getriebe, zum Beispiel Automatikgetriebe, zugeordnet sein. Der Druckluftbehälter 48 kann bspw. auch einem anderen pneumatischen Nebenverbraucher zugeordnet sein, z. B. einer Luftfederung des Nutzfahrzeugs. Der Druckluftbehälter 48 ist hängend unterhalb der Tragvorrichtung 26 angeordnet, z. B. mittels eines Spannbands (nicht dargestellt) an einer Halterung, die am Träger 28 befestigt ist. Der Druckluftbehälter 48 kann beispielsweise ein 8-Liter Druckluftbehälter sein.

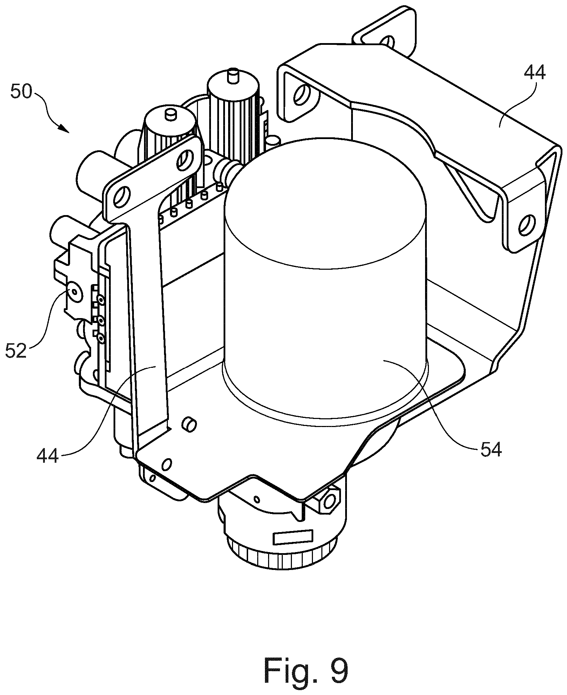

Figur 9 zeigt die Druckluftaufbereitung 50 in größerem Detail. Die Druckluftaufbereitung 50 ist beim ersten Druckluftmodul 24A und beim zweiten Druckluftmodul 24B baugleich und gleich angeordnet. Der Lufttrockner 54 ist zum Entfeuchten von Luft ausgebildet. Der Lufttrockner 54 kann eine wechselbare Kartusche aufweisen. Die Druckluftventileinrichtung 52 kann bspw. einen Druckregler, Rückschlagventile sowie ein Mehrkreis-Schutzventil für die unterschiedlichen Druckluftkreise, vorzugsweise Bremskreise, des Nutzfahrzeugs aufweisen.

Die Druckluftaufbereitung 50 ist mittels der Halterung 44 hängend an der Tragvorrichtung 26 befestigt. Die Druckluftaufbereitung 50 ist unterhalb der Tragvorrichtung 26 angeordnet. Die Halterung 44 kann an mehreren Anbindungspunkten mit der Druckluftaufbereitung 50 verbunden sein. Die Halterung 44 ist ferner an mehreren Anbindungspunkten mit den horizontalen Schenkeln 36 verbunden. Die Druckluftaufbereitung 50 kann somit von mehreren Seiten aus sicher gehalten sein.

Der Luftkompressor 56 des ersten Druckluftmoduls 24A verdichtet Luft zu Druckluft. Der Luftkompressor 56 kann einen Kompressorteil und einen Antriebsteil aufweisen. Der Luftkompressor 56 ist auf den horizontalen Schenkeln 36 und den Querstreben 30 getragen. Der Luftkompressor 56 ist oberhalb der horizontalen Schenkel 36 und der Querstreben 30 angeordnet. Bevorzugt ist der Luftkompressor 56 mittels elastischer Dämpferelemente 62 gedämpft auf der Tragvorrichtung 26 abgestützt. Der Luftkompressor 56 kann durch die Dämpferelemente 62 bspw. mittels einer Vierpunktlagerung abgestützt sein. Die Dämpferelemente 62 können den Luftkompressor 56 schwingungstechnisch von der Tragvorrichtung 26 und somit dem Rahmen 10 entkoppeln. Der Luftkompressor 56 kann so ausgerichtet sein, dass die massiven Kühlrippen des Antriebsteils des Luftkompressors 56 nach außen hin montiert sind. Der massive Antriebsteil kann somit eine gewisse Schutzfunktion ausüben.

Der Luftkompressor 56 des ersten Druckluftmoduls 24A kann einen wechselbaren Filter 64, vorzugsweise einen Luftfilter oder einen Ölfilter, aufweisen. Um einen ausreichenden Montageraum zum Wechseln des Filters 64 zu schaffen, kann die Verstärkungsstrebe 32 eine Aussparung 66, z. B. in Form einer Kerbe, Vertiefung oder eines Durchgangslochs, aufweisen. Beim Wechseln kann der Filter 64 durch bzw. entlang der Aussparung 66 geführt werden, z. B. parallel zur Längsachse des Nutzfahrzeugs (vgl. Figur 5).

Der Druckluftbehälter 58 des zweiten Druckluftmoduls 24B ist auf den horizontalen Schenkeln 36 und den Querstreben 30 getragen, z. B. mittels zwischengeordneter Halterungen 68, die sich auf den Querstreben 30 abstützen. Mittels Spannbändern (nicht dargestellt) kann der Druckluftbehälter 58 an den Halterungen 68 befestigt sein. Der Druckluftbehälter 58 ist oberhalb der horizontalen Schenkel 36 der Querstrebe 30 angeordnet. Der Druckluftbehälter 58 kann zweckmäßig einem Hinterachs-Bremskreis des Nutzfahrzeugs zugeordnet sein. Der Druckluftbehälter 58 kann bspw. ein 40-Liter Druckluftbehälter sein.

Die Erfindung ist nicht auf die vorstehend beschriebenen bevorzugten Ausführungsbeispiele beschränkt.

### Bezugszeichenliste

- 10: Rahmen
- 12: Längsträger
- 14: Querträger
- 16: Vorderachse
- 18: Hinterachse
- 20: Antriebseinrichtung
- 22: Gelenkwelle
- 24: Druckluftmodul
- 24A: Erstes Druckluftmodul
- 24B: Zweites Druckluftmodul
- 26: Tragvorrichtung
- 28: Träger
- 30: Querstrebe
- 32: Verstärkungsstrebe
- 34: Vertikaler Schenkel
- 36: Horizontaler Schenkel
- 38: Kragenabschnitt
- 40: Stützrippen
- 42: Durchgangsloch
- 44: Halterung
- 46: Druckluftbehälter
- 48: Druckluftbehälter
- 50: Druckluftaufbereitung
- 52: Druckluftventileinrichtung
- 54: Lufttrockner
- 56: Luftkompressor
- 58: Druckluftbehälter
- 60: Spannband
- 62: Dämpferelement
- 64: Filter
- 66: Aussparung
- 68: Halterung

## Patentansprüche

1. Druckluftmodul-Baukastensystem für ein Nutzfahrzeug, vorzugsweise einen Lastkraftwagen, aufweisend:
mehrere Druckluftkomponenten (46-58);
eine Tragvorrichtung (26), die an einem Fahrzeugrahmen (10) des Nutzfahrzeugs anbringbar ist,
**dadurch gekennzeichnet, dass**:
die Tragvorrichtung (26) und zumindest ein Teil der mehreren Druckluftkomponenten (46-58) zu einem ersten Druckluftmodul (24A) kombinierbar sind, wobei das erste Druckluftmodul (24A) einen Luftkompressor (56), mindestens einen Druckluftbehälter (46, 48) und eine Druckluftaufbereitung (50) der mehreren Druckluftkomponenten (46-58) aufweist; und
die Tragvorrichtung (26) und zumindest ein Teil der mehreren Druckluftkomponenten (46-58) zu einem zweiten Druckluftmodul (24B) kombinierbar sind, wobei das zweite Druckluftmodul (24B) den mindestens einen Druckluftbehälter (46, 48) und die Druckluftaufbereitung (50) und anstelle des Luftkompressors (56) mindestens einen weiteren Druckluftbehälter (58) der mehreren Druckluftkomponenten (46-58) aufweist.

2. Druckluftmodul-Baukastensystem nach Anspruch 1, wobei:
die Tragvorrichtung (26) dazu ausgebildet ist, die mehreren Druckluftkomponenten (46-58) in mehreren, vorzugsweise zwei, vertikal beabstandeten Ebenen zu tragen; und/oder
die Tragvorrichtung (26) dazu ausgebildet ist, die mehreren Druckluftkomponenten (46-58) zumindest teilweise von unten abzustützen und zumindest teilweise unterhalb der Tragvorrichtung (26) hängend zu tragen.

3. Druckluftmodul-Baukastensystem nach Anspruch 1 oder Anspruch 2, wobei:
der Luftkompressor (56), vorzugsweise mittels elastischer Dämpferelemente (62), auf der Tragvorrichtung (26) abgestützt ist; und
der mindestens eine weitere Druckluftbehälter (58), vorzugsweise starr, auf der Tragvorrichtung (26) abgestützt ist.

4. Druckluftmodul-Baukastensystem nach einem der vorherigen Ansprüche, wobei:
der mindestens eine Druckluftbehälter (46, 48) und/oder die Druckluftaufbereitung (50) unterhalb der Tragvorrichtung (26) hängend getragen ist.

5. Druckluftmodul-Baukastensystem nach einem der vorherigen Ansprüche, wobei:
der mindestens eine Druckluftbehälter (46, 48) einen ersten Druckluftbehälter (46) und einen zweiten Druckluftbehälter (48) aufweist.

6. Druckluftmodul-Baukastensystem nach Anspruch 5, wobei:
der erste Druckluftbehälter (46) und/oder der zweite Druckluftbehälter (48) beim ersten Druckluftmodul (24A) eine andere Funktion aufweist als beim zweiten Druckluftmodul (24B); und/oder
der erste Druckluftbehälter (46), vorzugsweise mittig, zwischen dem zweiten Druckluftbehälter (48) und der Druckluftaufbereitung (50) angeordnet ist, vorzugweise hängend an der Tragvorrichtung (26); und/oder
der erste Druckluftbehälter (46) bezüglich einer Querachse der Tragvorrichtung (26) über die Tragvorrichtung (26) hinaus übersteht.

7. Druckluftmodul-Baukastensystem nach Anspruch 5 oder Anspruch 6, wobei:
beim ersten Druckluftmodul (24A) der erste Druckluftbehälter (46) einem ersten Bremskreis des Nutzfahrzeugs und der zweite Druckluftbehälter (48) einem zweiten Bremskreis des Nutzfahrzeugs zugeordnet oder zuordenbar ist; und
beim zweiten Druckluftmodul (24B) der erste Druckluftbehälter (46) dem ersten Bremskreis des Nutzfahrzeugs, der zweite Druckluftbehälter (48) einem pneumatischen Nebenverbraucher des Nutzfahrzeugs und der mindestens eine weitere Druckluftbehälter (58) dem zweiten Bremskreis zugeordnet oder zuordenbar ist.

8. Druckluftmodul-Baukastensystem nach einem der vorherigen Ansprüche, wobei:
die Tragvorrichtung (26) einen ersten L-förmigen Träger (28) und einen zweiten L-förmigen Träger (28) aufweist, die durch mindestens ein Querelement (30) miteinander verbunden sind,
wobei vorzugsweise:
der erste L-förmige Träger (28) und der zweite L-förmige Träger (28) als Gleichteile ausgeführt sind; und/oder
mehrere Querelemente (30) umfasst sind, die als Gleichteile ausgeführt sind.

9. Druckluftmodul-Baukastensystem nach einem der vorherigen Ansprüche, wobei:
die Tragvorrichtung (26), vorzugsweise ein horizontaler Schenkel (36) eines L-förmigen Trägers (28) der Tragvorrichtung (26), mindestens ein, vorzugsweise rechteckiges, Durchgangsloch (42) aufweist, durch das ein Spannband (60) gespannt ist, das einen Druckbehälter (46) des mindestens einen Druckbehälters (46, 48) trägt.

10. Druckluftmodul-Baukastensystem Anspruch 9, wobei:
das mindestens eine Durchgangsloch (42) im Bereich eines Kontakts mit dem Spannband (60) abgerundet oder angefast ist; und/oder
eine Unterkante der Tragvorrichtung (26) im Bereich eines Kontakts mit dem Druckbehälter (46) abgerundet oder angefast ist.

11. Druckluftmodul-Baukastensystem nach einem der vorherigen Ansprüche, wobei:
die Tragvorrichtung (26) mindestens einen Kragenabschnitt (38) zum flächigen Anlegen an den Fahrzeugrahmen (10) aufweist, wobei der mindestens eine Kragenabschnitt (38) durch, vorzugsweise angeschweißte, Stützrippen (40) verstärkt ist.

12. Druckluftmodul-Baukastensystem nach einem der vorherigen Ansprüche, wobei:
der Luftkompressor (56) einen wechselbaren Filter (64) aufweist; und
die Tragvorrichtung (26) eine Verstärkungsstrebe (32) mit einer Aussparung (66) aufweist, wobei die Aussparung (66) einen zum Wechsel des wechselbaren Filters (64) erforderlichen Montageraum schafft, wobei der wechselbare Filter (64) beim Demontieren oder Montieren zwangsweise durch die Aussparung (66) zu führen ist.

13. Druckluftmodul-Baukastensystem nach einem der vorherigen Ansprüche, wobei:
die Druckluftaufbereitung (50) einen Lufttrockner (50), einen Druckregler (52) und/oder ein Mehrkreisschutzventil (52), vorzugsweise Vierkreisschutzventil, aufweist.

14. Elektromotorisch angetriebenes Nutzfahrzeug, vorzugsweise Lastkraftwagen, aufweisend:
das erste Druckluftmodul (24A), das aus dem Druckluftmodul-Baukastensystem nach einem der vorherigen Ansprüche kombiniert ist.

15. Verbrennungsmotorisch angetriebenes Nutzfahrzeug, vorzugsweise Lastkraftwagen, aufweisend:
das zweite Druckluftmodul (24B), das aus dem Druckluftmodul-Baukastensystem nach einem der Ansprüche 1 bis 13 kombiniert ist.

## Claims

1. A compressed air module assembly system for a commercial vehicle, preferably a lorry, comprising:
several compressed air components (46-58);
a support device (26) attachable to a vehicle frame (10) of the commercial vehicle, **characterised in that**
the support device (26) and at least some of the several compressed air components (46-58) can be combined to a first compressed air module (24A), wherein the first compressed air module (24A) comprises an air compressor (56), at least one compressed air reservoir (46, 48), and a compressed air conditioning unit (50) of the several compressed air components (46-58); and
the support device (26) and at least some of the several compressed air components (46-58) can be combined to a second compressed air module (24B), wherein the second compressed air module (24B) comprises the at least one compressed air reservoir (46, 48) and the compressed air conditioning unit (50) and, instead of the air compressor (56), at least one further compressed air reservoir (58) of the several compressed air components (46-58).

2. The compressed air module assembly system according to claim 1, wherein:
the support device (26) is configured to support the several compressed air components (46-58) in several, preferably two, vertically spaced planes; and/or
the support device (26) is configured to support the several compressed air components (46-58) at least partially from below and to support them at least partially suspended below the support device (26).

3. The compressed air module assembly system according to claim 1 or 2, wherein:
the air compressor (56) is supported on the support device (26), preferably by elastic damping elements (62); and
the at least one further compressed air reservoir (58) is supported, preferably rigidly, on the support device (26).

4. The compressed air module assembly system according to one of the preceding claims, wherein:
the at least one compressed air reservoir (46, 48) and/or the compressed air conditioning unit (50) is supported suspended below the support device (26).

5. The compressed air module assembly system according to one of the preceding claims, wherein:
the at least one compressed air reservoir (46, 48) comprises a first compressed air reservoir (46) and a second compressed air reservoir (48).

6. The compressed air module assembly system according to claim 5, wherein:
the first compressed air reservoir (46) and/or the second compressed air reservoir (48) has a different function in the first compressed air module (24A) than in the second compressed air module (24B); and/or
the first compressed air reservoir (46) is arranged, preferably centrally, between the second compressed air reservoir (48) and the compressed air conditioning unit (50), preferably suspended from the support device (26); and/or
the first compressed air reservoir (46) protrudes beyond the support device (26) with respect to a transverse axis of the support device (26).

7. The compressed air module assembly system according to claim 5 or 6, wherein:
in the first compressed air module (24A), the first compressed air reservoir (46) is assigned or assignable to a first brake circuit of the commercial vehicle and the second compressed air reservoir (48) is assigned or assignable to a second brake circuit of the commercial vehicle; and
in the second compressed air module (24B), the first compressed air reservoir (46) is assigned or assignable to the first brake circuit of the commercial vehicle, the second compressed air reservoir (48) is assigned or assignable to a pneumatic auxiliary consumer of the commercial vehicle and the at least one further compressed air reservoir (58) is assigned or assignable to the second brake circuit.

8. The compressed air module assembly system according to one of the preceding claims, wherein:
the support device (26) comprises a first L-shaped support (28) and a second L-shaped support (28), which are connected to each other by at least one transverse element (30),
wherein preferably:
the first L-shaped support (28) and the second L-shaped support (28) are identical components; and/or
several transverse elements (30) are included, which are embodied as identical components.

9. The compressed air module assembly system according to one of the preceding claims, wherein:
the support device (26), preferably a horizontal limb (36) of an L-shaped support (28) of the support device (26), has at least one, preferably rectangular, through-hole (42) through which a tensioning strap (60) is stretched, which supports a pressure reservoir (46) of the at least one pressure reservoir (46, 48).

10. The compressed air module assembly system according to claim 9, wherein:
the at least one through hole (42) is rounded or chamfered in the region of contact with the tensioning strap (60); and/or
a lower edge of the support device (26) is rounded or chamfered in the region of contact with the pressure reservoir (46).

11. The compressed air module assembly system according to one of the preceding claims, wherein:
the support device (26) comprises at least one collar portion (38) for flat contact with the vehicle frame (10), wherein the at least one collar portion (38) is reinforced by, preferably welded-on, support ribs (40).

12. The compressed air module assembly system according to one of the preceding claims, wherein:
the air compressor (56) comprises a replaceable filter (64); and
the support device (26) has a reinforcing strut (32) with a recess (66), wherein the recess (66) creates a mounting space required for changing the replaceable filter (64), wherein the replaceable filter (64) is to be forcibly guided through the recess (66) during disassembly or assembly.

13. The compressed air module assembly system according to one of the preceding claims, wherein:
the compressed air conditioning unit (50) comprises an air dryer (50), a pressure regulator (52) and/or a multi-circuit protection valve (52), preferably a four-circuit protection valve.

14. An electric motor-driven commercial vehicle, preferably a lorry, comprising:
the first compressed air module (24A), which is combined from the compressed air module assembly system according to one of the preceding claims.

15. An internal combustion engine driven commercial vehicle, preferably a lorry, comprising:
the second compressed air module (24B), which is combined from the compressed air module assembly system according to one of claims 1 to 13.

## Revendications

1. Système modulaire de modules d'air comprimé pour un véhicule utilitaire, de préférence un camion, comprenant :
plusieurs composants à air comprimé (46-58) ;
un dispositif de support (26) qui est apte à être monté sur un châssis de véhicule (10) du véhicule utilitaire,
**caractérisé en ce que** :
le dispositif de support (26) et au moins une partie de la pluralité de composants à air comprimé (46-58) sont aptes à être combinés en un premier module d'air comprimé (24A), le premier module d'air comprimé (24A) comprenant un compresseur d'air (56), au moins un réservoir d'air comprimé (46, 48) et un système (50) de traitement de l'air comprimé de la pluralité de composants à air comprimé (46-58) ; et
le dispositif de support (26) et au moins une partie de la pluralité de composants à air comprimé (46-58) sont aptes à être combinés en un deuxième module d'air comprimé (24B), le deuxième module d'air comprimé (24B) présentant ledit au moins un réservoir d'air comprimé (46, 48) et le système (50) de traitement d'air comprimé et, à la place du compresseur d'air (56), au moins un autre réservoir d'air comprimé (58) de la pluralité de composants à air comprimé (46-58).

2. Système modulaire de modules d'air comprimé selon la revendication 1, dans lequel :
le dispositif de support (26) est conçu pour supporter la pluralité de composants à air comprimé (46-58) dans plusieurs plans, de préférence deux, espacés verticalement ; et/ou
le dispositif de support (26) est conçu pour soutenir au moins partiellement par le bas la pluralité de composants à air comprimé (46-58) et pour les supporter au moins partiellement en suspension en-dessous du dispositif de support (26).

3. Système modulaire de modules d'air comprimé selon la revendication 1 ou la revendication 2, dans lequel :
le compresseur d'air (56) est supporté sur le dispositif de support (26), de préférence au moyen d'éléments amortisseurs élastiques (62) ; et
ledit au moins un autre réservoir d'air comprimé (58) est supporté, de préférence de manière rigide, sur le dispositif de support (26).

4. Système modulaire de modules d'air comprimé selon l'une des revendications précédentes, dans lequel :
ledit au moins un réservoir d'air comprimé (46, 48) et/ou le système (50) de traitement d'air comprimé est porté en suspension sous le dispositif de support (26).

5. Système modulaire de modules d'air comprimé selon l'une des revendications précédentes, dans lequel :
ledit au moins un réservoir d'air comprimé (46, 48) comprend un premier réservoir d'air comprimé (46) et un deuxième réservoir d'air comprimé (48).

6. Système modulaire de modules d'air comprimé selon la revendication 5, dans lequel :
le premier réservoir d'air comprimé (46) et/ou le deuxième réservoir d'air comprimé (48) présente, dans le premier module d'air comprimé (24A), une fonction différente de celle du deuxième module d'air comprimé (24B) ; et/ou
le premier réservoir d'air comprimé (46) est agencé, de préférence au centre, entre le deuxième réservoir d'air comprimé (48) et le système (50) de traitement d'air comprimé, en étant de préférence suspendu au dispositif de support (26) ; et/ou
le premier réservoir d'air comprimé (46) dépasse du dispositif de support (26) par rapport à un axe transversal du dispositif de support (26).

7. Système modulaire de modules d'air comprimé selon la revendication 5 ou la revendication 6, dans lequel :
pour le premier module d'air comprimé (24A), le premier réservoir d'air comprimé (46) est associé ou est apte à être associé à un premier circuit de freinage du véhicule utilitaire et le deuxième réservoir d'air comprimé (48) est associé ou est apte à être associé à un deuxième circuit de freinage du véhicule utilitaire ; et
dans le cas du deuxième module d'air comprimé (24B), le premier réservoir d'air comprimé (46) est affecté ou est apte à être affecté au premier circuit de freinage du véhicule utilitaire, le deuxième réservoir d'air comprimé (48) à un consommateur à air comprimé auxiliaire du véhicule utilitaire et ledit au moins un autre réservoir d'air comprimé (58) au deuxième circuit de freinage.

8. Système modulaire de modules d'air comprimé selon l'une des revendications précédentes, dans lequel :
le dispositif de support (26) comprend un premier support (28) en forme de L et un deuxième support (28) en forme de L, reliés entre eux par au moins un élément transversal (30),
dans lequel, de préférence :
le premier support en forme de L (28) et le deuxième support en forme de L (28) sont réalisés sous forme de pièces identiques ; et/ou
plusieurs éléments transversaux (30) sont inclus, qui sont réalisés sous forme de pièces identiques.

9. Système modulaire de modules d'air comprimé selon l'une des revendications précédentes, dans lequel :
le dispositif de support (26), de préférence une branche horizontale (36) d'un support en forme de L (28) du dispositif de support (26), présente au moins un trou de passage (42), de préférence rectangulaire, à travers lequel est tendue une bande de serrage (60) qui porte un réservoir de pression (46) dudit au moins un réservoir de pression (46, 48).

10. Système modulaire de modules d'air comprimé selon la revendication 9, dans lequel :
ledit au moins un trou traversant (42) est arrondi ou chanfreiné au niveau d'un contact avec la bande de serrage (60) ; et/ou
un bord inférieur du dispositif de support (26) est arrondi ou chanfreiné dans la zone d'un contact avec le réservoir sous pression (46).

11. Système modulaire de modules d'air comprimé selon l'une des revendications précédentes, dans lequel :
le dispositif de support (26) présente au moins une portion de collerette (38) destinée à être appliquée à plat contre le châssis (10) du véhicule, ladite au moins une portion de collerette (38) étant renforcée par des nervures de soutien (40), de préférence soudées.

12. Système modulaire de modules d'air comprimé selon l'une des revendications précédentes, dans lequel :
le compresseur d'air (56) comporte un filtre interchangeable (64) ; et
le dispositif de support (26) comprend une entretoise de renforcement (32) avec un évidement (66), l'évidement (66) créant un espace de montage nécessaire au remplacement du filtre interchangeable (64), le filtre interchangeable (64) devant être forcé à passer par l'évidement (66) lors du démontage ou du montage.

13. Système modulaire de modules d'air comprimé selon l'une des revendications précédentes, dans lequel :
le traitement de l'air comprimé (50) comprend un sécheur d'air (50), un régulateur de pression (52) et/ou une vanne de protection multicircuit (52), de préférence une vanne de protection à quatre circuits.

14. Véhicule utilitaire entraîné par un moteur électrique, de préférence un camion, comprenant :
le premier module d'air comprimé (24A) combiné à partir du système modulaire de modules d'air comprimé selon l'une des revendications précédentes.

15. Véhicule utilitaire à moteur à combustion interne, de préférence un camion, comprenant :
le deuxième module d'air comprimé (24B), combiné à partir du système modulaire de modules d'air comprimé selon l'une des revendications 1 à 13.
